# EUROPÄISCHE PATENTANMELDUNG

(11) **EP 2 568 161 A1**
(43) Veröffentlichungstag der Anmeldung: **13.03.2013**
(21) Anmeldenummer: 11405319.2
(22) Anmeldetag: 09.09.2011
(51) Int. Cl.: F03B 3/04, F03B 3/12, F03B 13/10

(54) **Vorrichtung zur Gewinnung von elektrischer Energie aus Wasserkraft**

(71) Anmelder: Niederer, Robert, 6863 Besazio (CH)
(72) Erfinder: Niederer, Robert, 6863 Besazio (CH)
(74) Vertreter: EGLI-EUROPEAN PATENT ATTORNEYS

(57) **Zusammenfassung**

Die Erfindung betrifft eine Vorrichtung (1) zur Gewinnung elektrischer Energie aus Wasserkraft. Insbesondere handelt es sich bei der vorliegenden Erfindung um eine Vorrichtung (1) zur Gewinnung von elektrischer Energie aus Wasserkraft, welche eine Vielzahl an Rotorblättern (12) aufweist, die dazu ausgebildet sind, Wasserströmungen in Energie umzuwandeln. Darüber hinaus ist bei der erfindungsgemässen Vorrichtung ein röhrenförmiges Rotorelement (11) vorgesehen, welches eine Innenseite und eine Aussenseite aufweist, wobei die Innenseite des röhrenförmigen Rotorelements (11) dazu ausgebildet ist, die Vielzahl von Rotorblättern (12) aufzunehmen. Erfindungsgemäss weist die Vorrichtung ferner eine Gehäusestruktur (13) auf, welche dazu ausgebildet ist, das röhrenförmige Rotorelement (11) aufzunehmen, wobei das röhrenförmige Rotorelement (11) derart innerhalb der Gehäusestruktur (13) gelagert ist, dass das röhrenförmige Rotorelement (11) frei rotierbar ist.

## Beschreibung

Die vorliegende Erfindung betrifft eine Vorrichtung zur Gewinnung elektrischer Energie aus Wasserkraft nach Patentanspruch 1. Insbesondere handelt es sich dabei um eine Vorrichtung zur Gewinnung elektrischer Energie aus Wasserkraft, welche eine Vielzahl von Rotorblättern aufweist, die dazu ausgebildet sind, Wasserströmungen in Rotationsenergie umzuwandeln.

In Anbetracht der Endlichkeit fossiler Energieträger ist es ein global anerkanntes Problem, nachhaltige, regenerative Energiequellen zu erschliessen. Darüber hinaus gilt es, durch die Erschliessung regenerativer Energiequellen dem zwingenden Handlungsbedarf zur Verminderung der CO2-Belastung unserer Atmosphäre gerecht zu werden. Unter den zur Verfügung stehenden regenerativen Energieressourcen haben sich bereits die Wind- und Solarenergie als zukünftige Energielieferanten favorisiert. Für die Versorgung mit elektrischer Energie durch Solar- oder Windkraftanlagen sind bereits etliche Projekte an Land entwickelt worden. Durch die Installation solcher Wind- oder Solarkraftanlagen kommt es zu einer nicht unerheblichen Beeinflussung des Landschaftsbildes und damit auch zum Eingriff in die Fauna und Flora unserer Erde.

Eine bislang nur sehr wenig genutzte alternative, regenerative Energiequelle stellt die Gewinnung von elektrischer Energie aus Wasserkraft dar. Solche Wasserkraftwerke können dazu genutzt werden, die kinetische bzw. potentielle Energie des Wassers zur Gewinnung von elektrischer Energie zu nutzen. Insbesondere ist es in diesem Zusammenhang bekannt, Meeresströmungen (z. B. Gezeitenströmungen), Flussströmungen oder auch Staustufen (Speicherkraftwerk) zur Erzeugung von elektrischer Energie aus Wasserkraft zu verwenden. Im Einzelnen werden zur Erzeugung von Energie durch Wasserkraftwerke Anlagen verwendet, welche eine ähnliche Gestaltung wie Windenergieanlagen aufweisen. Dementsprechend ist es üblich, Wasserturbinen einzusetzen, welche Laufräder mit Rotorblättern verwenden, um die kinetische Energie der Wasserströmung in elektrische Energie umzuwandeln.

Aus dem Stand der Technik ist es dabei beispielsweise bekannt, Francis- oder Kaplanturbinen einzusetzen, welche eine zentrale Antriebswelle entlang ihrer Mittelachse aufweisen, um die Rotationsenergie der Turbine auf einen Generator zu übertragen. Diese Antriebswelle hat den Nachteil, dass die effektive Antriebsfläche der Rotorblätter verkleinert wird und stellt zudem ein sehr wartungsaufwendiges Verschleissteil dar. Insbesondere sind diese Antriebswellen durch die teils sehr hohen Drücke der Wasserströmung sehr anfällig für Beschädigungen, was zum kompletten Ausfall der Wasserkraftanlage führen kann.

Aufgrund der oben genannten Problemstellung liegt der vorliegenden Erfindung die Aufgabe zugrunde, eine Vorrichtung zur Gewinnung elektrischer Energie aus Wasserkraft anzugeben, welche die Wirkfläche der Rotorblätter maximiert und zugleich verschleissbeständig ist.

Zur Lösung der oben genannten Aufgabe dient der Gegenstand des unabhängigen Patentanspruches 1.

Demnach handelt es sich bei der vorliegenden Erfindung um eine Vorrichtung zur Gewinnung von elektrischer Energie aus Wasserkraft, welche eine Vielzahl an Rotorblättern aufweist, die dazu ausgebildet sind, Wasserströmungen in Energie umzuwandeln. Darüber hinaus ist bei der erfindungsgemässen Vorrichtung ein röhrenförmiges Rotorelement vorgesehen, welches eine Innenseite und eine Aussenseite aufweist, wobei die Innenseite des röhrenförmigen Rotorelements dazu ausgebildet ist, die Vielzahl von Rotorblättern aufzunehmen. Erfindungsgemäss weist die Vorrichtung ferner eine Gehäusestruktur auf, welche dazu ausgebildet ist, das röhrenförmige Rotorelement aufzunehmen, wobei das röhrenförmige Rotorelement derart innerhalb der Gehäusestruktur gelagert ist, dass das röhrenförmige Rotorelement frei rotierbar ist.

Die erfindungsgemässe Vorrichtung zur Erzeugung von elektrischer Energie aus Wasserkraft weist eine Vielzahl von Vorteilen auf. So ist es durch die erfindungsgemässe Vorrichtung nicht mehr notwendig, die Rotationsenergie der Rotorblätter über eine verschleissanfällige Antriebswelle an einen Generator zu übertragen. Vielmehr kann durch den Erfindungsgegenstand die Rotationsenergie der Rotorblätter praktisch direkt dazu genutzt werden, elektrische Energie zu erzeugen und ist folglich langzeitig stabiler ausgebildet. Ferner kann durch die erfindungsgemässe Vorrichtung die Wirkfläche der Rotorblätter maximiert werden. Darüber hinaus weist die erfindungsgemässe Vorrichtung verringerte Herstellungs- und Wartungskosten, im Vergleich zu den aus dem Stand der Technik bekannten Wasserkraftanlagen, auf.

Vorteilhafte Weiterbildungen der erfindungsgemässen Vorrichtung zur Gewinnung von elektrischer Energie aus Wasserkraftanlagen sind in den Unteransprüchen angegeben.

So ist es bei einer weiteren Realisierung der erfindungsgemässen Vorrichtung vorgesehen, dass das röhrenförmige Rotorelement an seiner Innenseite Haltestrukturen zum Aufnehmen der Vielzahl von Rotorblättern aufweist. Demzufolge sind die Rotorblätter nicht etwa mit der Innenseite des röhrenförmigen Rotorelements verklebt oder verschweisst, sondern sind durch die erfindungsgemässen Haltestrukturen lösbar an der Innenseite des Rotorelements angebracht. Somit wird die Wartung der erfindungsgemässen Vorrichtung noch weiter vereinfacht und werden die Betriebskosten reduziert. Insbesondere bei Speicherkraftwerken, welche die Energie fallenden Wassers aus Höhen von mehreren hundert Metern zur Erzeugung von elektrischer Energie verwenden, ist die Belastung auf die Rotorblätter besonders hoch, weshalb diese regelmässig ausgetauscht werden müssen. Der erfindungsgemässe Aufbau vereinfacht ein solches Auswechseln der Verschleissteile, insbesondere der Rotorblätter, erheblich.

Gemäss einer weiteren Ausführungsform sind diese Haltestrukturen an der Innenseite des röhrenförmigen Rotorelements als geschwungene Nuten ausgebildet. Die erfindungsgemässen Nuten stellen eine einfache und kostengünstige Möglichkeit dar, Haltestrukturen für die Rotorblätter der erfindungsgemässen Vorrichtung auszubilden. Weiterhin können diese geschwungenen Nuten dazu verwendet werden, den Verdrillungsgrad der Rotorblätter zueinander sehr genau festzulegen.

Nach einer weiteren Umsetzung der erfindungsgemässen Vorrichtung zur Gewinnung elektrischer Energie aus Wasserkraft ist es vorgesehen, dass das röhrenförmige Rotorelement eine zentrale Längsachse aufweist, um die die Rotorblätter derart radialsymmetrisch angeordnet sind, dass ein Hohlraum entlang der zentralen Längsachse des röhrenförmigen Rotorelements entsteht. Während die aus dem Stand der Technik bekannten Vorrichtungen zur Gewinnung von elektrischer Energie aus Wasserkraft eine Antriebswelle entlang ihrer zentralen Längsachse aufweisen, kann bei der erfindungsgemässen Vorrichtung ein Hohlraum vorgesehen sein. Dies hat den Vorteil, dass sich Verschmutzungen (z.B. Algen) oder Kleintiere (z. B. Fische) nicht an der Antriebswelle entlang der zentralen Längsachse festsetzen, sondern ohne Hindernis durch die erfindungsgemässe Vorrichtung treten können. Demnach ist die erfindungsgemässe Vorrichtung im hohen Masse umweltverträglich und resistent gegen Verschmutzungen.

Gemäss einer weiteren Ausführungsform der erfindungsgemässen Vorrichtung sind die Rotorblätter, zur Veränderung eines Anstellwinkels der Rotorblätter gegenüber der Strömungsrichtung des Wassers, verstellbar an der Innenseite des röhrenförmigen Rotorelements angebracht. Insbesondere ist es demzufolge vorstellbar, einen Mechanismus vorzusehen, welcher dazu dient, die Verdrillung der Rotorblätter zueinander individuell einstellen zu können. Somit ist es möglich, den Anstellwinkel der erfindungsgemässen Rotorblätter gegenüber der Strömungsrichtung des Wassers je nach Anwendungsfall zu justieren. Dies ist vor allen Dingen zur Anpassung der erfindungsgemässen Vorrichtung auf unterschiedliche Strömungsgeschwindigkeiten des Wassers sinnvoll.

Gemäss einer weiteren vorteilhaften Ausgestaltung der Rotorblätter sind diese derart auf der Innenseite des röhrenförmigen Rotorelements angebracht, dass die Vorrichtung von zwei Seiten zur Gewinnung von elektrischer Energie aus Wasserkraft verwendbar ist. Insbesondere bei der Anwendung der erfindungsgemässen Vorrichtung zur Gewinnung von Energie aus Meeresströmungen ist es von Vorteil, dass die erfindungsgemässe Vorrichtung von beiden Seiten betreibbar ist. So ist es selbst bei einer Meeresströmung mit starken Änderungen der Strömungsrichtung möglich, die erfindungsgemässe Vorrichtung effizient zu nutzen.

Nach einem weiteren vorteilhaften Aspekt der erfindungsgemässen Vorrichtung besteht die Gehäusestruktur aus mehreren Einzelteilen, welche lösbar miteinander verbunden sind. Dies hat den Vorteil, dass die Einzelteile der Gehäusestruktur der erfindungsgemässen Vorrichtung separat ausgebaut und ersetzt werden können, was die Wartungskosten weiter verringert. Darüber hinaus ist es durch die lösbare Ausgestaltung der Einzelteile möglich, das in der Gehäusestruktur aufgenommene röhrenförmige Rotorelement schnell und einfach auszubauen bzw. zu ersetzen. Der modulare Aufbau der Gehäusestruktur vereinfacht ferner die Verfahrensschritte zur Herstellung der erfindungsgemässen Vorrichtung.

Gemäss einer weiteren Ausführungsform ist die Aussenseite des röhrenförmigen Rotorelements über ein Wälzlager mit der Gehäusestruktur verbunden. Der Einsatz eines Wälzlagers zwischen dem röhrenförmigen Rotorelement und der Gehäusestruktur hat den Vorteil, dass die Reibung und somit die Verlustleistung und der Verschleiss zwischen der Gehäusestruktur und dem Rotorelement möglichst gering bleiben. Selbstverständlich ist es auch denkbar, anstatt des Wälzlagers ein Gleitlager mit Flüssigkeitsreibung vorzusehen.

Die erfindungsgemässe Vorrichtung kann gemäss einer weiteren Realisierung einen Einlauftrichter zur Steigerung der Strömungsgeschwindigkeit des Wassers, welches die Vorrichtung durchströmt, aufweisen. Ein solcher Einlauftrichter kann vor allem bei sehr niedrigen Strömungsgeschwindigkeiten des Wassers vorteilhaft sein, um die benötigte optimale Drehzahl der Rotorblätter und somit des röhrenförmigen Rotorelements zu erreichen. In diesem Zusammenhang ist es ebenfalls vorstellbar, dass der erfindungsgemässe Einlauftrichter einen verstellbaren Öffnungsdurchmesser aufweist.

Gemäss einer weiteren Umsetzung der erfindungsgemässen Vorrichtung ist vorgesehen, dass die Aussenseite des röhrenförmigen Rotorelements wasserdicht mit der Gehäusestruktur verbunden ist. Somit werden Korrosionsschäden an der erfindungsgemässen Vorrichtung effektiv vermieden, was die Standzeit deutlich erhöht. Zum Zwecke der Abdichtung können beispielsweise Ringdichtungen, welche mit der Gehäusestruktur verbunden sind, verwendet werden.

Nach einer weiteren Realisierung der erfindungsgemässen Vorrichtung weist die Aussenseite des röhrenförmigen Rotorelements eine Vielzahl von Permanentmagneten auf, wobei die Gehäusestruktur mit Induktionsspulen versehen ist. Auf diese Weise kann das röhrenförmige Rotorelement zusammen mit der Gehäusestruktur der erfindungsgemässen Vorrichtung dazu verwendet werden, elektrische Energie direkt zu erzeugen. Es bedarf demzufolge keines separaten Generators, wodurch sich der Wirkungsgrad der erfindungsgemässen Vorrichtung weiter erhöht. Selbstverständlich ist es alternativ auch möglich, dass die Permanentmagneten an der Gehäusestruktur angebracht werden, während das röhrenförmige Rotorelement die Wicklungen der Induktionsspule aufweist.

Gemäss einer weiteren erfindungsgemässen Ausgestaltung der Vorrichtung zur Erzeugung von elektrischer Energie aus Wasserkraft weist die Gehäusestruktur mindestens ein Stabilisierungselement zum Ausrichten der Vorrichtung in Richtung der Strömungsrichtung des Wassers auf. Durch den Einsatz von Stabilisierungselementen an der Gehäusestruktur ist es möglich, die Vorrichtung in Richtung der Strömungsrichtung des Wassers auszurichten. Dies ist vor allem beim Einsatz der erfindungsgemässen Vorrichtung zur Erzeugung elektrischer Energie aus Meeresströmung vorteilhaft, da sich gerade die Meeresströmung aufgrund unterschiedlicher Faktoren häufig in ihrer Richtung ändert.

Das erwähnte mindestens eine Stabilisierungselement kann gemäss einer weiteren Ausführungsform in Form einer Flosse ausgebildet sein. Stabilisierungselemente in Flossenform ermöglichen eine einfache und zuverlässige Ausrichtung der erfindungsgemässen Vorrichtung entlang der Strömungsrichtung des Wassers.

Gemäss einer weiteren Ausführungsform ist die Gehäusestruktur über einen Führungsarm mit einem Verankerungselement verbunden, wobei die Gehäusestruktur auf dem Führungsarm frei rotierbar ist. Der Einsatz eines Verankerungselements mit Führungsarm, auf dem die Gehäusestruktur frei rotierbar ist, ist insbesondere beim Einsatz der erfindungsgemässen Vorrichtung zur Erzeugung von Energie aus Meeresströmung bzw. Flussströmungen vorteilhaft. Gemäss dieser Ausführungsform ist sichergestellt, dass die erfindungsgemässe Vorrichtung auch bei grossen Strömungsgeschwindigkeiten an der gewünschten Stelle des Meeresbodens bzw. Flussbettes verharrt und dennoch entlang der Strömungsrichtung des Wassers ausgerichtet werden kann.

Schlussendlich kann die Gehäusestruktur, gemäss einer weiteren Ausführungsform, dazu ausgebildet sein, mindestens zwei röhrenförmige Rotorelemente aufzunehmen. Nach dieser Umsetzung können die mindestens zwei röhrenförmigen Rotorelemente in Serie betrieben werden. Diese Ausgestaltung ist vor allem bei Anwendungen der Vorrichtung in Fällen starker Wasserströmung von Vorteil.

Im Folgenden werden bevorzugte Ausführungsbeispiele der Erfindung anhand der Zeichnungen näher erläutert.

Dabei zeigen:
- Fig. 1: eine perspektivische Frontansicht einer ersten Ausführungsform der erfindungsgemässen Vorrichtung;
- Fig. 2: eine perspektivische Seitenansicht eines erfindungs-gemässen röhrenförmigen Rotorelements mit Rotorblättern;
- Fig. 3a: eine perspektivische Seitenansicht des erfindungsgemässen röhrenförmigen Rotorelements aus Fig. 2;
- Fig. 3b: eine perspektivische Seitenansicht der erfindungsgemässen Rotorblätter aus Fig. 2;
- Fig.: 4a eine perspektivische Schnittdarstellung durch das erfindungsgemässe röhrenförmige Rotorelement mit Rotorblättern nach Fig. 2;
- Fig. 4b: eine Frontansicht des in Fig. 4a dargestellten Rotorelements mit Rotorblättern;
- Fig. 4c: eine Draufsicht auf das in Fig. 4a dargestellte erfindungsgemässe Rotorelement mit Rotorblättern;
- Fig. 4d: eine Seitenansicht des in Fig. 4a dargestellten röhrenförmigen Rotorelements mit Rotorblättern;
- Fig. 5: eine Explosionsdarstellung einer zweiten Ausführungsform der erfindungsgemässen Vorrichtung;
- Fig. 6a: eine perspektivische Darstellung der Vorrichtung gemäss Fig. 5 mit Verankerungselement;
- Fig. 6b: eine Seitenansicht der Vorrichtung gemäss Fig. 6a;
- Fig. 6c: eine Draufsicht auf die Vorrichtung gemäss Fig. 6a;
- Fig.: 6d eine Ansicht von hinten auf die in Fig. 6a dargestellte Vorrichtung; und
- Fig. 7: eine perspektivische Ansicht einer weiteren Ausführungsform der erfindungsgemässen Vorrichtung.

In der folgenden Figurenbeschreibung sind gleiche und gleich wirkende Teile aus Gründen der Übersichtlichkeit mit gleichen Bezugszeichen versehen.

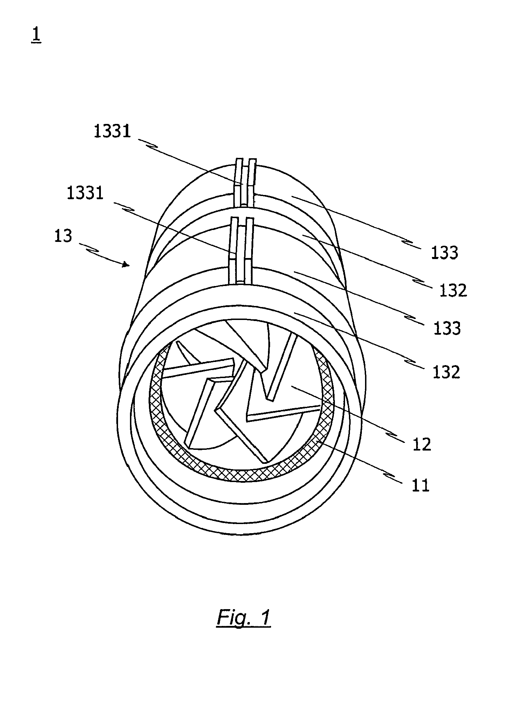

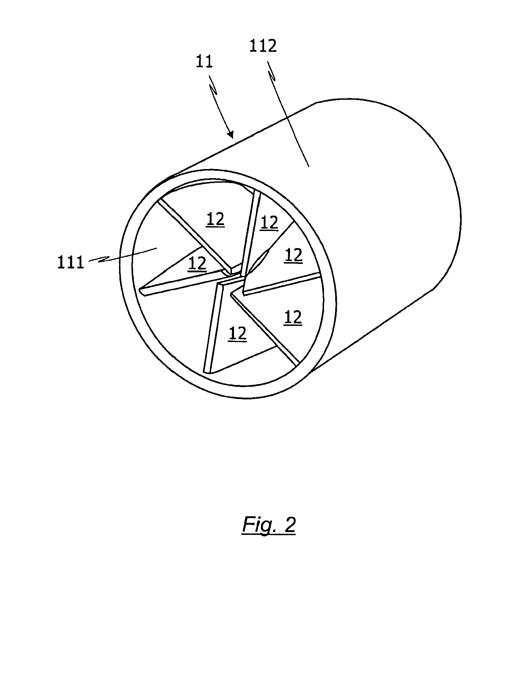

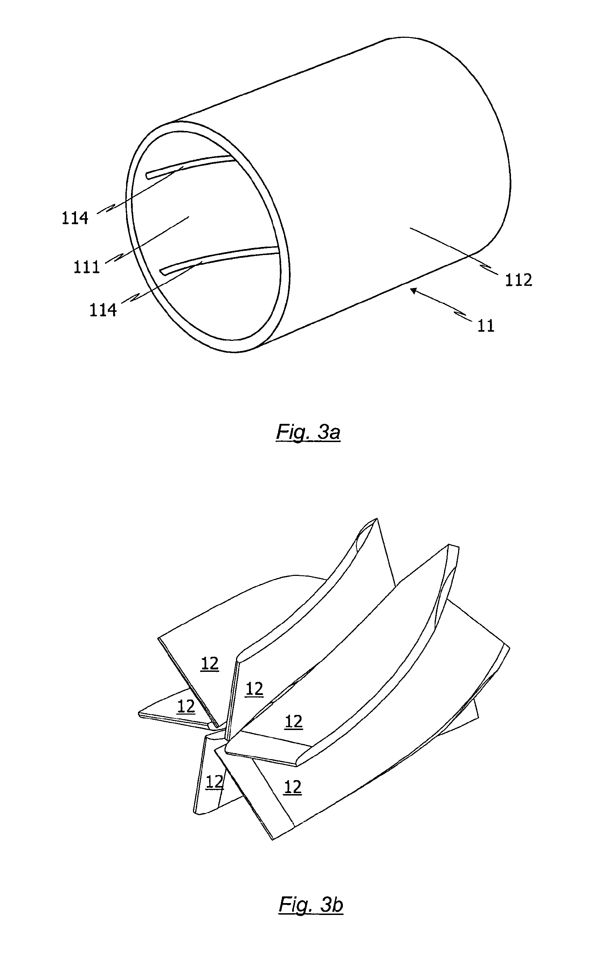

Fig. 1 zeigt eine erste Ausführungsform einer erfindungsgemässen Vorrichtung zur Gewinnung elektrischer Energie aus Wasserkraft, wie diese beispielsweise in den Rohrleitungen eines Wasserspeicherkraftwerks Anwendung finden kann. Die in Fig. 1 dargestellte Vorrichtung zur Gewinnung elektrischer Energie aus Wasserkraft weist dabei mehrere, insbesondere sechs Rotorblätter 12 auf, welche dazu ausgebildet sind, Wasserströmungen in Rotationsenergie umzuwandeln. Diese Vielzahl von Rotorblättern 12 wird an der Innenseite 111 (Fig. 2, 3a) eines röhrenförmigen Rotorelements 11 aufgenommen. Durch die Verbindung des röhrenförmigen Rotorelements 11 mit den Rotorblättern 12 wird bei Auftreffen von Wasser auf die Rotorblätter 12 die kinetische Energie des Wassers in Rotationsenergie der Rotorblätter und des röhrenförmigen Rotorelements 11 umgewandelt.

Wie ferner aus Fig. 1 entnommen werden kann, weist die Vorrichtung eine Gehäusestruktur 13 auf, welche dazu ausgebildet ist, das röhrenförmige Rotorelement 11 aufzunehmen. Dabei ist das röhrenförmige Rotorelement 11 derart innerhalb der Gehäusestruktur 13 gelagert, dass das röhrenförmige Rotorelement 11 frei rotierbar ist und zum Erzeugen von elektrischer Energie aus oben genannter Rotationsenergie dient. Zur besseren Übersicht ist in Fig. 2 nochmals ein erfindungsgemässes röhrenförmiges Rotorelement 11 dargestellt. Das röhrenförmige Rotorelement weist eine Innenseite 111 sowie eine Aussenseite 112 auf, wobei die Rotorblätter 12 mit der Innenseite 111 des röhrenförmigen Rotorelements 11 verbunden sind. Wie später genauer erläutert werden wird, ist dabei der Anstellwinkel der Rotorblätter vorzugsweise individuell verstellbar.

Wie es der Darstellung gemäss Fig. 3a entnommen werden kann, weist das röhrenförmige Rotorelement 11 an seiner Innenseite 111 Haltestrukturen 114, zum lösbaren Aufnehmen der Vielzahl von Rotorblättern 12, auf. Im vorliegenden Fall sind diese Haltestrukturen 114 als geschwungene Nuten ausgebildet. Es ist selbstverständlich jedoch auch denkbar, dass es sich bei den Haltestrukturen 114 um jegliche andere Verankerungsmöglichkeiten für die Vielzahl an Rotorblättern 12 wie beispielsweise Befestigungswinkel zum Anschrauben der Rotorblätter handelt. Die in Fig. 3a dargestellten Haltestrukturen 114 sind dabei vorzugsweise auf die Form der in Fig. 3b dargestellten Rotorblätter 12 angepasst, d. h. ihre geschwungene Struktur entspricht dem Verlauf der verdrillten Rotorblätter 12.

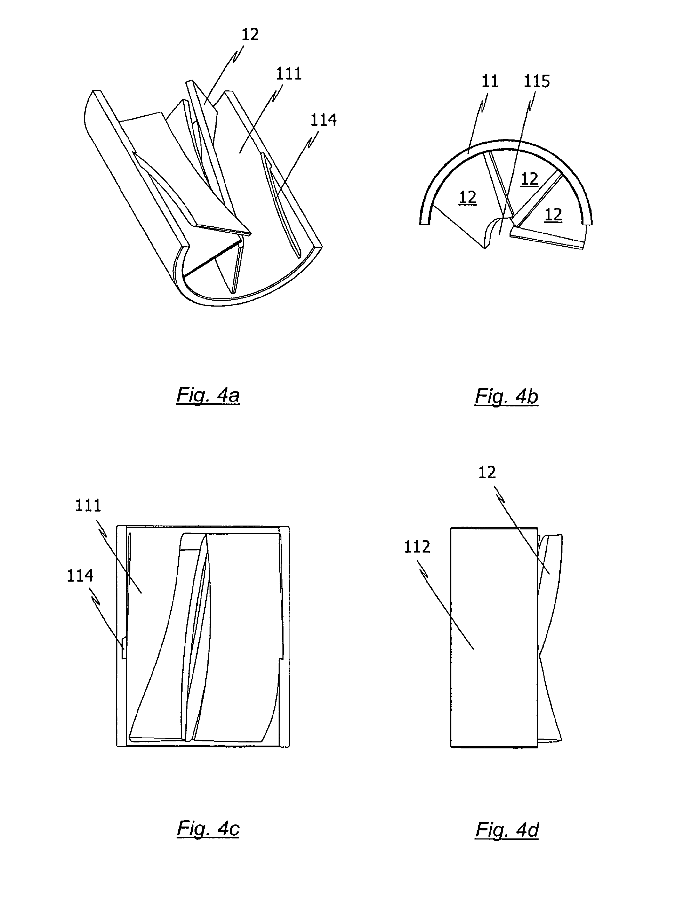

In den Figuren 4a bis 4d sind verschiedene Ansichten eines Schnittes durch ein röhrenförmiges Rotorelement gemäss Fig. 2 dargestellt. Wie insbesondere Fig. 4b zu entnehmen ist, können die Rotorblätter 12 derart radialsymmetrisch um eine zentrale Längsachse des röhrenförmigen Rotorelements 11 angeordnet sein, dass ein Hohlraum 115 entlang der zentralen Längsachse des Rotorelements 11 entsteht. Durch diesen Hohlraum 115 in der Mitte des röhrenförmigen Rotorelements kann vorzugsweise verhindert werden, dass sich Schmutzablagerungen an den Rotorblättern 12 der erfindungsgemässen Vorrichtung festsetzen.

Mit Bezug auf die Figuren 3b und 4a sei erwähnt, dass die Rotorblätter 12 verstellbar an der Innenseite 111 des röhrenförmigen Rotorelements 11 angebracht sein können, um den Anstellwinkel der Rotorblätter 12 gegenüber der Strömungsrichtung des Wassers zu verändern. Mit anderen Worten ist es möglich, die Verdrillung der Rotorblätter je nach Stärke der Strömungsgeschwindigkeit des Wassers einzustellen. So ist bei langsamen Strömungsgeschwindigkeiten, wie sie bei der Nutzung von Meeresströmungen zur Gewinnung von elektrischer Energie auftreten, eine stärkere Verdrillung (d.h. ein vergrösserter Anstellwinkel) der Rotorblätter 1 von Nöten, um die benötigte Drehzahl des erfindungsgemässen röhrenförmigen Rotorelements 11 zu gewährleisten.

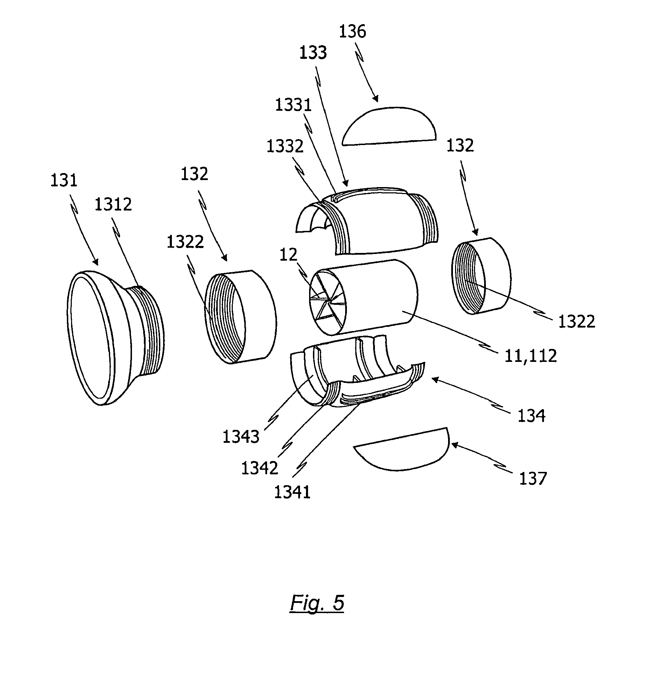

Durch die spezielle Anordnung der Vielzahl an Rotorblättern 12 auf der Innenseite 111 des röhrenförmigen Rotorelements 11, wie sie beispielsweise in Fig. 3b dargestellt ist, kann die erfindungsgemässe Vorrichtung vorteilhafterweise von zwei Seiten zur Gewinnung von elektrischer Energie aus Wasserkraft verwendet werden. Insbesondere bei der Anwendung der erfindungsgemässen Vorrichtung zur Gewinnung von Energie aus Meeresströmungen (Figuren 5 bis 7) ist es von Vorteil, dass die erfindungsgemässe Vorrichtung 1 von beiden Seiten betreibbar ist. So ist es bei starken Änderungen der Strömungsrichtung der Meeresströmung möglich, die erfindungsgemässe Vorrichtung 1 effizient zu nutzen.

Die Darstellung gemäss Fig. 5 zeigt eine Explosionsansicht einer weiteren Ausführungsform der erfindungsgemässen Vorrichtung 1 zur Gewinnung von elektrischer Energie aus Wasserkraft. Wie es der Darstellung zu entnehmen ist, besteht die Gehäusestruktur dabei aus mehreren Einzelteilen, welche lösbar miteinander verbunden sind. Insbesondere können diese Einzelteile, wie dargestellt, über Innen- bzw. Aussengewinde 1312, 1322, 1332, 1342 lösbar miteinander verbunden werden. Die Ausbildung der Gehäusestruktur aus mehreren Einzelteilen hat den Vorteil, dass alle Einzelteile der erfindungsgemässen Vorrichtung schnell und kostengünstig ausgebaut bzw. ersetzt werden können. Insbesondere ist das röhrenförmige Rotorelement 11, gemäss dieser Ausführungsform, zwischen einem oberen Gehäuseteil 133 und einem unteren Gehäuseteil 134 aufgenommen. Die oberen bzw. unteren Gehäuseteile 133, 134 werden an ihren Endbereichen durch Ringelemente 132 miteinander verbunden, um das röhrenförmige Rotorelement 11 sicher zu umschliessen.

Wie es ferner der Fig. 5 entnommen werden kann, steht die Aussenseite 112 des röhrenförmigen Rotorelements 11 über ein Wälzlager 1343 mit der Gehäusestruktur 13, insbesondere dem oberen bzw. unteren Gehäuseteil 133, 134 in Kontakt. Es sei darauf hingewiesen, dass aus Gründen der Übersichtlichkeit auf eine Darstellung der Wälzkörper des Wälzlagers 1343 verzichtet worden ist. Selbstverständlich wäre es auch denkbar, dass anstatt eines Wälzlagers 1343 jede andere Lagerform, wie beispielsweise Gleitlager, Anwendung findet.

Die erfindungsgemässe Vorrichtung zur Erzeugung von elektrischer Energie weist, wie dies in Fig. 5 dargestellt ist, einen Einlauftrichter 131 zur Steigerung der Strömungsgeschwindigkeit des Wassers, welches die Vorrichtung durchströmt, auf. Im Einzelnen kann dieser Einlauftrichter 131 über ein Aussengewinde 1312 mit dem gleichen Ringelement 132 verbunden sein, welches auch den oberen Gehäuseteil 133 mit dem unteren Gehäuseteil 134 verbindet. Der Einlauftrichter kann vor allem bei sehr niedrigen Strömungsgeschwindigkeiten des Wassers vorteilhaft sein, um die benötigte optimale Drehzahl der Rotorblätter 12 bzw. des Rotorelements 11 zu erreichen und somit den Energiegewinn zu maximieren.

Es sei darauf hingewiesen, dass es von Vorteil sein kann, wenn die Aussenseite 112 des röhrenförmigen Rotorelements 11 wasserdicht mit der Gehäusestruktur verbunden ist. Dadurch werden Korrosionsschäden an der erfindungsgemässen Vorrichtung effektiv vermieden, was die Standzeit deutlich erhöht. Zwar sind diese in den Zeichnungen nicht explizit dargestellt, jedoch können zu diesem Zweck beispielsweise Ringdichtungen, welche mit der Gehäusestruktur verbunden sind, verwendet werden.

Gemäss einer besonders vorteilhaften Ausführungsform weist die Aussenseite 112 des röhrenförmigen Rotorelements 11 eine Vielzahl von Permanentmagneten auf, während an der Gehäusestruktur korrespondierende Induktionsspulen vorgesehen sind. Auf diese Weise kann das röhrenförmige Rotorelement 11 zusammen mit der Gehäusestruktur der erfindungsgemässen Vorrichtung dazu verwendet werden, elektrische Energie direkt zu erzeugen. Mit anderen Worten stellt die erfindungsgemässe Vorrichtung gleichzeitig einen Antrieb und einen Generator dar.

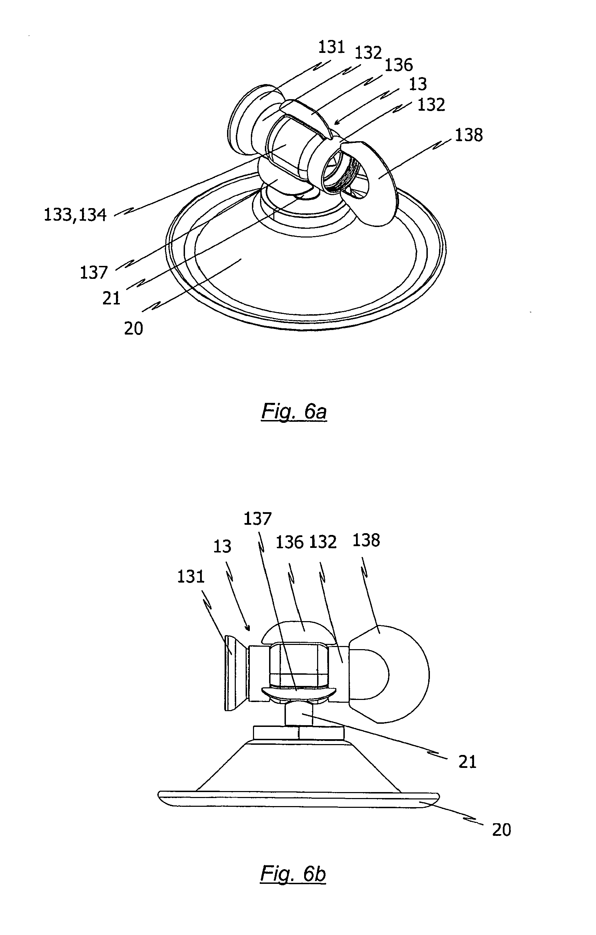

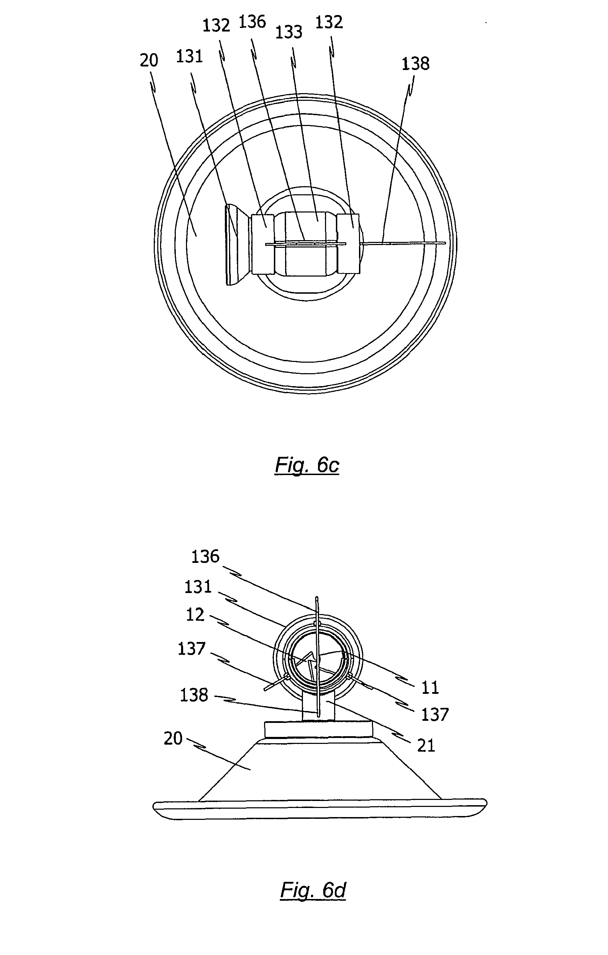

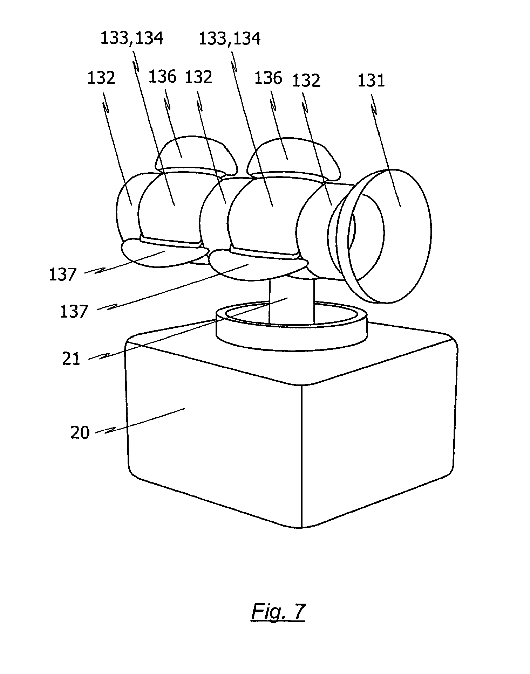

Wie es den Figuren 5 bis 7 entnommen werden kann, weist die Gehäusestruktur gemäss einer speziellen Ausführungsform mindestens ein Stabilisierungselement 136, 137, 138 zum Ausrichten der Vorrichtung in Richtung der Strömungsrichtung des Wassers auf. Dies ist insbesondere dann von Vorteil, wenn die erfindungsgemässe Vorrichtung zur Energiegewinnung aus Meeresströmungen eingesetzt wird. Bei diesem Anwendungsfall wird die erfindungsgemässe Vorrichtung auf dem Meeresboden versenkt und unter Wasser betrieben. Eine hierfür besonders vorteilhafte Ausführungsform ist den Figuren 6 und 7 zu entnehmen. Insbesondere können die Stabilisierungselemente 136, 137, 138 dabei als Flossen ausgebildet sein, welche an Halterungen 1331, 1341 der Gehäusestruktur 13 befestigt werden. Im Einzelnen handelt es sich dabei bei der Ausführungsform gemäss Figuren 6a bis 6b um ein oberes Stabilisierungselement 136, welches am oberen Gehäuseteil 133 befestigt ist, zwei seitliche Stabilisierungselemente 137, welche am unteren Gehäuseteil 134 befestigt sind, sowie ein hinteres Stabilisierungselement 138. Durch diese Anordnung der Stabilisierungselemente 136, 137, 138 ist es auf einfache Weise möglich, die erfindungsgemässe Vorrichtung entlang der Strömungsrichtung des Wassers auszurichten.

Um eine sichere Ausrichtung der erfindungsgemässen Vorrichtung 1 gegenüber der Strömungsrichtung des Wassers zu gewährleisten, muss die Gehäusestruktur 13 zumindest in der horizontalen Ebene frei rotierbar sein. Aus diesem Grund ist es vorgesehen, dass die Gehäusestruktur 13 der erfindungsgemässen Vorrichtung 1 über einen Führungsarm 21 mit einem Verankerungselement 20 verbunden ist, wobei die Gehäusestruktur 13 auf dem Führungsarm 21 frei rotierbar ist. Bei der Anwendung der erfindungsgemässen Vorrichtung 1 als tauchendes Wasserkraftwerk kann das dargestellte Verankerungselement 20 dazu genutzt werden, die Vorrichtung 1 auf dem Meeresboden bzw. dem Flussbett eines Fliessgewässers zu positionieren. Durch die Anbringung der Gehäusestruktur 13 am Verankerungselement 20 über einen Führungsarm 21 ist die Gehäusestruktur 13 und damit auch das Rotorelement 11 sowie die Rotorblätter 12 in der horizontalen Ebene frei rotierbar.

Mit Bezug auf Fig. 7 sei ferner erwähnt, dass die Gehäusestruktur 13 dazu ausgebildet sein kann, mindestens zwei röhrenförmige Rotorelemente 11 aufzunehmen, um den Betrieb zweier röhrenförmiger Rotorelemente 11 in Serie zu ermöglichen. Dabei kann die erfindungsgemässe Vorrichtung 1, wie dargestellt, zwei der vorher beschriebenen Gehäusestrukturen 13 aufweisen, welche in Serie durch die Ringelemente 132 miteinander verbunden sind. Je nach Stärke der Strömungsgeschwindigkeit kann somit eine beliebige Anzahl von Gehäusestrukturen 13 mit Rotorelementen 11 in Reihe geschaltet werden, um eine bestmögliche Ausnutzung der Wasserkraft zu erreichen.

## Patentansprüche

1. Vorrichtung (1) zur Gewinnung elektrischer Energie aus Wasserkraft, wobei die Vorrichtung (1) Folgendes aufweist:
eine Vielzahl an Rotorblättern (12), welche dazu ausgebildet sind, Wasserströmungen in Rotationsenergie umzuwandeln;
ein röhrenförmiges Rotorelement (11), welches eine Innenseite (111) und eine Aussenseite (112) aufweist, wobei die Innenseite (112) dazu ausgebildet ist, die Vielzahl von Rotorblättern (12) aufzunehmen; und
eine Gehäusestruktur (13), welche dazu ausgebildet ist, das röhrenförmige Rotorelement (11) aufzunehmen,
wobei das röhrenförmige Rotorelement (11) derart innerhalb der Gehäusestruktur (13) gelagert ist, dass das röhrenförmige Rotorelement (11) frei rotierbar ist zum Erzeugen von elektrischer Energie aus Rotationsenergie.

2. Vorrichtung nach Anspruch 1,
wobei das röhrenförmige Rotorelement (11) an seiner Innenseite (111) Haltestrukturen (114) zum lösbaren Aufnehmen der Vielzahl von Rotorblättern (12) aufweist.

3. Vorrichtung nach Anspruch 2,
wobei die Haltestrukturen (114) an der Innenseite (111) des röhrenförmigen Rotorelements (11) als geschwungene Nuten ausgebildet sind.

4. Vorrichtung nach einem der vorhergehenden Ansprüche,
wobei das röhrenförmige Rotorelement (11) eine zentrale Längsachse aufweist, um die die Rotorblätter (12) derart radialsymmetrisch angeordnet sind, dass ein Hohlraum (115) entlang der zentralen Längsachse des röhrenförmigen Rotorelements (11) entsteht.

5. Vorrichtung nach einem der vorhergehenden Ansprüche,
wobei die Rotorblätter (12) verstellbar an der Innenseite (111) des röhrenförmigen Rotorelements (11) angebracht sind, zur Veränderung eines Anstellwinkels der Rotorblätter (12) gegenüber der Strömungsrichtung des Wassers.

6. Vorrichtung nach einem der vorhergehenden Ansprüche,
wobei die Rotorblätter (12) derart auf der Innenseite (111) des röhrenförmigen Rotorelements (11) angebracht sind, dass die Vorrichtung (1) von zwei Seiten zur Gewinnung von elektrischer Energie aus Wasserkraft verwendbar ist.

7. Vorrichtung nach einem der vorhergehenden Ansprüche,
wobei die Gehäusestruktur (13) aus mehreren Einzelteilen besteht, welche lösbar miteinander verbunden sind.

8. Vorrichtung nach einem der vorhergehenden Ansprüche,
wobei die Aussenseite (112) des röhrenförmigen Rotorelements (11) über ein Wälzlager (1343) mit der Gehäusestruktur (13) in Kontakt steht.

9. Vorrichtung nach einem der vorhergehenden Ansprüche,
wobei die Vorrichtung (1) einen Einlauftrichter (131) zur Steigerung der Strömungsgeschwindigkeit des Wassers, welches die Vorrichtung (1) durchströmt, aufweist.

10. Vorrichtung nach einem der vorhergehenden Ansprüche,
wobei die Aussenseite (112) des röhrenförmigen Rotorelements (11) wasserdicht mit der Gehäusestruktur (13) verbunden ist.

11. Vorrichtung nach einem der vorhergehenden Ansprüche,
wobei die Aussenseite (112) des röhrenförmigen Rotorelements (11) eine Vielzahl von Permanentmagneten und die Gehäusestruktur (13) korrespondierende Induktionsspulen aufweist.

12. Vorrichtung nach einem der vorhergehenden Ansprüche,
wobei die Gehäusestruktur (13) mindestens ein Stabilisierungselement (136, 137, 138) zum Ausrichten der Vorrichtung (1) in Richtung der Strömungsrichtung des Wassers aufweist.

13. Vorrichtung nach Anspruch 12,
wobei das mindestens eine Stabilisierungselement (136, 137) in Form einer Flosse ausgebildet ist.

14. Vorrichtung nach einem der vorhergehenden Ansprüche,
wobei die Gehäusestruktur (13) über einen Führungsarm (21) mit einem Verankerungselement (20) verbunden ist und wobei die Gehäusestruktur (13) auf dem Führungsarm (21) frei rotierbar ist.

15. Vorrichtung nach einem der vorhergehenden Ansprüche,
wobei die Gehäusestruktur (13) dazu ausgebildet ist, mindestens zwei röhrenförmige Rotorelemente (11) aufzunehmen, zum Betrieb der mindestens zwei röhrenförmigen Rotorelemente (11) in Serie.
